Europäisches Patentamt

**European Patent Office**

**Office européen des brevets**

(11) Numéro de publication: **0 006 058**
**A1**

# DEMANDE DE BREVET EUROPEEN

(21) Numéro de dépôt: **79400336.8**

(22) Date de dépôt: 29.05.79

(51) Int. Cl.²: **B 23 B 41/00**

(30) Priorité: 01.06.78 FR 7816976

(43) Date de publication de la demande:
**12.12.79** Bulletin **79/25**

(84) Etats Contractants Désignés:
**BE CH DE GB IT LU NL SE**

(71) Demandeur: **Société Anonyme dite: ATELCO**
**51, rue Théodore Deck**
**F-68500 Guebwiller(FR)**

(72) Inventeur: **Lorang, Jean-Paul**
**2, rue Sambre et Meuse**
**F-68500 Guebwiller(FR)**

(74) Mandataire: **Aubertin, François**
**Cabinet Bugnion Associes S.A.R.L. 4, rue de Haguenau**
**F-67000 Strasbourg(FR)**

(54) Unité de perçage pour produits sidérurgiques.

(57) L'invention concerne une unité de perçage pour produits sidérurgiques et, notamment pour poutrelles, profilés, tôles et larges-plats.

Cette unité de perçage est caractérisée en ce qu'elle comporte des moyens de translation (32) de l'ensemble de perçage (22) pour la réalisation de séries de trous disposés transversalement par rapport à l'avance des produits sidérurgiques (18).

L'invention se rapporte à l'usinage, en particulier le perçage des produits sidérurgiques.

EP 0 006 058 A1

./...

Croydon Printing Company Ltd.

FIG. 1

## Unité de perçage pour produits sidérurgiques

L'invention concerne une unité de perçage pour produits sidérurgiques et, notamment pour poutrelles, profilés, tôles et larges-plats.

Actuellement, on utilise dans de nombreuses constructions des produits sidérurgiques et, en particulier des poutrelles et des profilés. Fréquemment, ces pièces, constituant les ossatures métalliques, sont assemblées entre-elles par rivetage et/ou boulonnage. Les dessins d'assemblage des pièces entre-elles doivent être étudiés avec un soin particulier et leur exécution faire l'objet de contrôles soignés, car la solidité d'un ouvrage métallique dépend essentiellement de la bonne réalisation des assemblages. Pour ces assemblages par rivetage et/ou par boulonnage, il faut prévoir non seulement des pièces intermédiaires de jonction mais également des moyens permettant de réaliser des trous dans l'âme et/ou dans les ailes des profilés et des poutrelles à des emplacements très précis.

Pour la réalisation de ces trous, on a conçu des unités de perçage.

On connaît déjà une unité de perçage comportant soit une ou plusieurs broches pratiquant des trous dans l'aile supérieure du profilé et/ou de la poutrelle et dont le sens de perçage est dirigé depuis le haut vers le bas. Pour le passage et la mise en place du profilé et/ou de la poutrelle à percer, il est nécessaire d'escamoter la ou les broches. Toutefois, les hauteurs de l'âme du profilé et/ou de la poutrelle sont très variables et, actuellement, la gamme de ces hauteurs s'échelonne entre quatre vingt et mille millimètres. De ce fait, l'ensemble de perçage occupe tantôt une position basse, tantôt une position haute. Lorsqu'il y a lieu de passer d'une position à l'autre, il faut, soit relever, soit rabaisser l'ensemble de perçage, ce qui nécessite une certaine perte de temps. Or, fréquemment, les produits sidérurgiques sont débités à une vitesse donnée et cette perte de temps pour modifier la position de l'ensemble de perçage risque de perturber la chaîne cinématique en amont et en aval de l'unité de perçage.

Par ailleurs, pour ces unités de perçage, il faut prévoir une ossature, soutenant l'ensemble de perçage, très rigide puisque le perçage

0006058

doit être très précis pour permettre un assemblage correct, par rivetage et boulonnage, des pièces constituant les ossatures métalliques. Il est certain que cette ossature augmente considérablement les dimensions de ces unités de perçage et entraîne nécessairement une augmentation du prix de revient en fonction des frais d'investissement.

Ces unités de perçage nécessitent, pour un perçage correct, l'utilisation d'un lubrifiant. Celui-ci s'écoule à travers le trou percé à l'intérieur du profilé en entraînant les copeaux métalliques. Il faut donc prévoir des moyens supplémentaires pour enlever les copeaux métalliques et le résidu du lubrifiant.

De même, on connaît déjà une unité de perçage correspondant au préambule de la revendication 1 (brevet américain n° 3.041.896). Cette unité de perçage comporte un dispositif de perçage disposé en dessous d'une table de travail et dont le sens de perçage est dirigé depuis le bas vers le haut. Le dispositif connu perce le trou toujours selon le même plan vertical. Or, le gabarit de perçage, perpendiculaire à l'avance des profilés et/ou des poutrelles, varie en fonction de la dimension des profilés et/ou des poutrelles. Par ailleurs, il s'avère parfois nécessaire de percer des trous de part et d'autre de l'âme verticale. L'unité de perçage, selon ce brevet américain, ne permet ni une modification du gabarit de perçage, ni le perçage de plusieurs trous situés dans un même plan transversal.

Par ailleurs, il s'avère nécessaire de percer simultanément, selon un plan horizontal et selon un plan vertical, pour réaliser simultanément des trous dans l'âme et dans les ailes des profilés.

On connaît déjà par la Offenlegungsschrift n° 24.15.118 une unité de perçage permettant le perçage simultané de trous selon un plan vertical et un plan horizontal. L'unité de perçage, selon ce brevet, comporte un dispositif de perçage dont le perçage est réalisé selon un sens dirigé de haut en bas et de deux dispositifs de perçage assurant le perçage horizontal. Toutefois, cette unité de perçage comporte les mêmes inconvénients que ceux cités ci-dessus : perte de temps pour modifier la position haute ou basse du dispositif de perçage vertical.

La présente invention a pour but d'apporter un remède à cette difficulté. L'invention, telle qu'elle est caractérisée dans les revendications résout le problème consistant à percer verticalement depuis le bas vers le haut une pluralité de trous situés sur un même plan transversal par rapport à l'axe longitudinal du produit sidérurgique à percer, ce perçage vertical de bas en haut pouvant être combiné à au moins un perçage horizontal.

Les avantages obtenus grâce à cette invention consistent essentiellement en ceci que l'on maintient la cadence de la chaîne cinématique en amont et en aval de l'unité de perçage conforme à l'invention lors de changement de profilés, ce changement pouvant être, soit un changement des dimensions de la poutrelle, profilés, tôles, larges-plats et autres, soit un changement de la nature du produit sidérurgique.

Dans ce qui suit, l'invention est exposée plus en détail à l'aide de dessins représentant seulement un mode d'exécution.

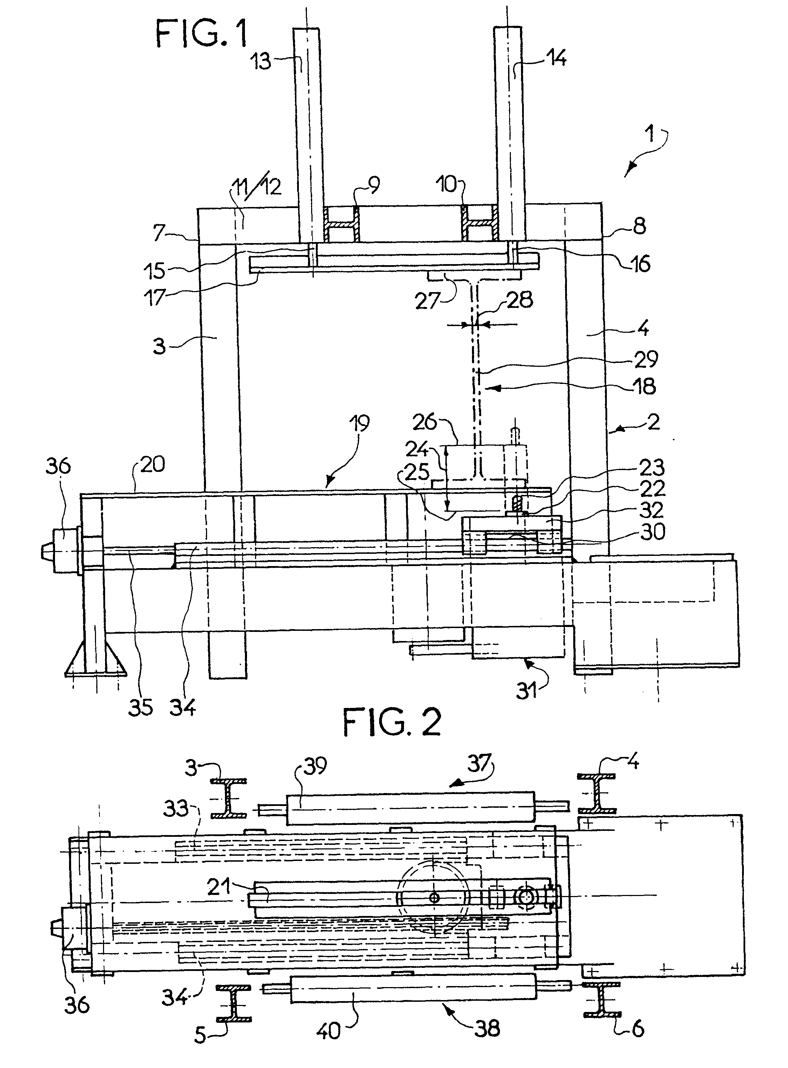

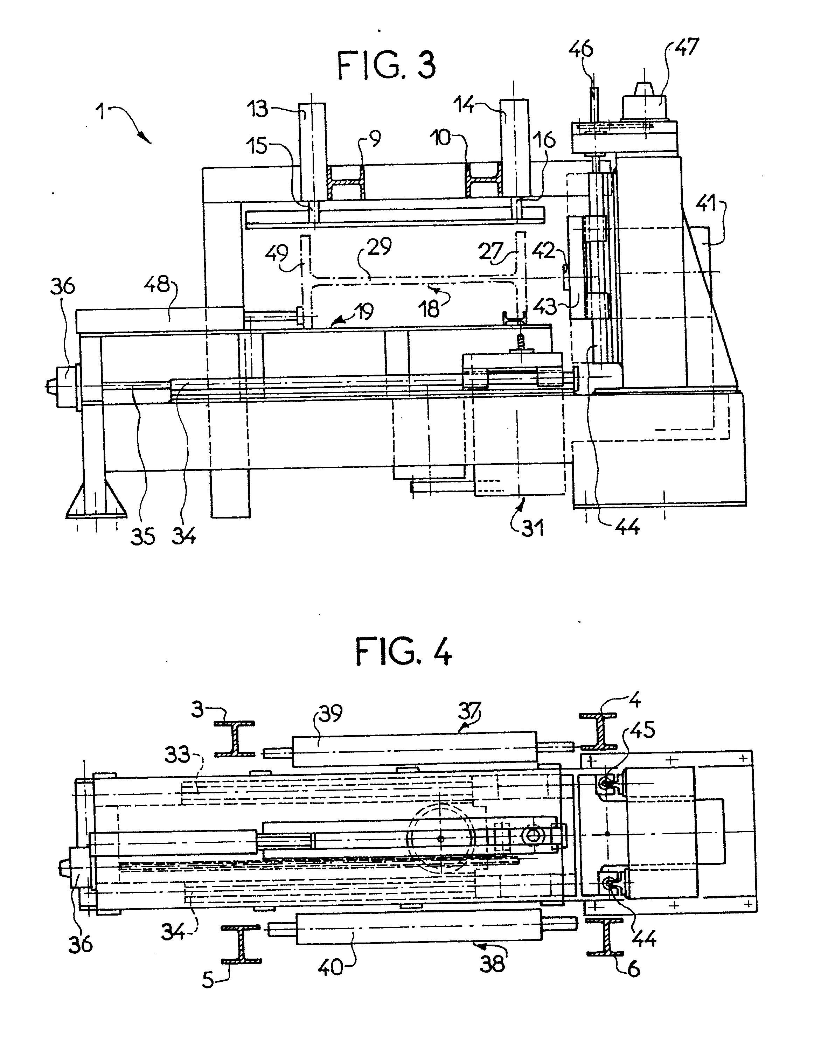

La figure 1 est une vue en élévation d'une unité de perçage conforme à l'invention ; la figure 2 est une vue en plan de cette unité de perçage ; la figure 3 est une vue en élévation d'une unité de perçage selon un autre mode de réalisation ; la figure 4 est une vue en plan de cette unité de perçage selon l'autre mode de réalisation.

On se réfère aux figures 1 et 2.

L'unité de perçage 1 comporte une superstructure 2 constituée de quatre montants 3, 4, 5, 6 dont leurs extrémités supérieures sont reliées entre-elles par des longerons 9, 10 et par des traverses 11, 12. Cette superstructure 2 sert de support à des vérins 13, 14 dont les positions 15, 16 sont reliées par un élément transversal 17. Cet élément transversal 17 appuie le profilé à percer 18 sur une table de travail 19.

Cette table de travail 19, robuste et fortement dimensionnée, comporte un dessus 20 présentant une lumière 21. A travers cette lumière 21 passe au moins une broche de perçage 22 pourvue d'une tête 23. Cette broche de perçage 22 se déplace verticalement depuis le bas vers le haut. La hauteur de la course 24 depuis sa position basse 25 jusqu'à sa position haute 26 est légèrement supérieure à la somme de la longueur d'une demi-aile 27 et de l'épaisseur 28 de l'âme 29 du profilé 18. De ce fait, on peut, non seulement, percer l'aile du profilé 18 tel que visible dans la figure 1 mais également l'âme 29 en couchant le profilé 18 tel que visible dans la figure 3. En raison des profilés actuellement fabriqués, la hauteur de l'aile nécessite une hauteur de course 24 de la broche de perçage 22 de l'ordre de quatre cents millimètres. Cette broche de perçage 22 est disposée à la partie supérieure 30 d'un ensemble de perçage 31 connu en soi. Cet ensemble de perçage 31 est solidaire d'un chariot 32 mobile transversalement. Ce chariot 32 coulissant sur deux guides parallèles 33, 34 est actionné par un arbre de commande 35 mû par une force motrice 36.

On dispose de part et d'autre de la table de travail 19 un chemin de roulement 37, 38 dont seul le rouleau d'extrémité 39, 40 est visible dans la figure 2.

Bien entendu, l'unité de perçage 1 peut être couplée à une unité de tronçonnage ou, pour augmenter la rentabilité de l'ensemble, il y a la possibilité de mettre l'unité de perçage en parallèle avec l'unité de tronçonnage. Toutefois, ces différentes possibilités de combinaison d'une ou de plusieurs unités de perçage avec une ou plusieurs unités de tronçonnage ne modifient en rien le but de l'invention qui réside dans le fait que l'on procède à un perçage vertical dirigé de bas vers le haut.

On se réfère aux figures 3 et 4 représentant un mode de réalisation particulier. En plus des éléments cités ci-dessus, l'unité de perçage 1 comporte un ensemble de perçage horizontal 41. Cet ensemble 41 présente au moins une broche de perçage 42 et il est monté sur un chariot 43 coulissant verticalement le long de deux glissières verticales 44, 45. Ce chariot 43 est actionné par un arbre de commande 46 mû par une force motrice 47. Pour compenser la pression exercée par la broche de perçage sur l'aile 27 du profilé 18, on prévoit un vérin 48 exerçant une poussée sur l'autre aile 49 du profilé 18. Ce vérin 48 est solidaire de la table de travail 19. Selon ce mode de réalisation, on peut donc percer simultanément l'aile 27 du profilé 18 par l'intermédiaire de l'ensemble de perçage 41 et l'âme 29 de ce même profilé 18 par l'ensemble de perçage 31.

Selon un autre mode de réalisation non représenté par des figures mais facilement concevable, on pourvoit l'unité de perçage 1 de deux ensembles de perçage horizontal placés de part et d'autre de l'axe médian de déplacement du profilé 18. Ainsi, il sera possible de percer simultanément les deux ailes 27 et 49 et l'âme 29 du profilé 18.

Revendications de brevet

1. Unité de perçage (1) pour produits sidérurgiques et notamment pour poutrelles (18), profilés, tôles et larges-plats présentant un ensemble de perçage à une broche (22), disposé à la partie inférieure de la table de travail (19), effectuant un perçage vertical dirigé depuis le bas vers le haut, caractérisée en ce qu'elle comporte des moyens de translation (32) de l'ensemble de perçage (22) pour la réalisation de séries de trous disposés transversalement par rapport à l'avance des produits sidérurgiques (18).

2. Unité de perçage selon 1, caractérisée en ce que les moyens de translation sont un chariot (32) servant de support audit ensemble de perçage coulissant sur deux guides parallèles (33, 34) et actionné par un arbre de commande (35) mû par une force motrice (36).

3. Unité de perçage selon 1, caractérisée en ce que le dessus (20) de la table de travail (19) comporte une lumière (21) transversale par rapport à l'avance des produits sidérurgiques (18) pour le passage de la broche de perçage (22) soumise non seulement à un mouvement vertical mais également à une translation.

4. Unité de perçage selon 1, caractérisée en ce qu'elle comporte en combinaison un ensemble de perçage vertical (1) dirigé depuis le bas vers le haut et présentant une broche de perçage (22) soumise à un mouvement vertical et à un mouvement transversal et au moins un ensemble de perçage horizontal (41) pour pratiquer simultanément une série de trous disposés transversalement par rapport à l'avance des produits sidérurgiques (18) dans l'âme (29) du profilé (18) et des trous dans au moins une aile (27, 49) du même profilé (18).

FIG. 1

FIG. 2

1/2

0006058

# FIG. 3

# FIG. 4

**Office européen des brevets**

# RAPPORT DE RECHERCHE EUROPEENNE

EP 79 40 0336

| Catégorie | Citation du document avec indication, en cas de besoin, des parties pertinentes | Revendication concernée |
|---|---|---|
| | DE - A - 1 627 035 (WAGNER)<br>* Page 4, page 5, page 6 et figures 1 et 2 *<br>-- | 1,2,4 |
| | FR - A - 2 050 688 (SIRUGUE)<br>* Page 2, lignes 27-40; page 3; page 4, lignes 1-27 et figures 1 et 2 *<br>-- | 1,2,4 |
| | US - A - 3 090 261 (HILL)<br>* Colonne 2, lignes 16-61 et figure 1 *<br>-- | 1,2,4 |
| A | US - A - 3 041 896 (MAY)<br>---- | 1 |

**DOCUMENTS CONSIDERES COMME PERTINENTS**

**CLASSEMENT DE LA DEMANDE (Int. Cl.²)**

B 23 B 41/00

**DOMAINES TECHNIQUES RECHERCHES (Int. Cl.²)**

B 23 B 41/00
B 23 B 39/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-09-1979 | BOGAERT |

OEB Form 1503.1  06.78